(19) Europäisches Patentamt
European Patent Office
Office européen des brevets

(11) Numéro de publication: **0 190 530**
**B1**

(12) # FASCICULE DE BREVET EUROPÉEN

(45) Date de publication du fascicule du brevet: **12.10.88**

(51) Int. Cl.⁴: **B 01 J 31/22**, C 08 L 83/04

(21) Numéro de dépôt: **85420231.4**

(22) Date de dépôt: **17.12.85**

(54) **Complexe platine-alcénylcyclohexène comme catalyseur de réaction d'hydrosilylation et son procédé de préparation.**

(30) Priorité: **20.12.84 FR 8419509**

(43) Date de publication de la demande:
**13.08.86 Bulletin 86/33**

(45) Mention de la délivrance du brevet:
**12.10.88 Bulletin 88/41**

(84) Etats contractants désignés:
**AT BE CH DE FR GB IT LI LU NL SE**

(56) Documents cité:
**EP-A-0 029 723**
**EP-A-0 057 459**
**FR-A-2 255 103**
**US-A-3 159 601**

(73) Titulaire: **RHONE- POULENC CHIMIE, 25, quai Paul Doumer, F-92408 Courbevoie Cédex (FR)**

(72) Inventeur: **Cavezzan, Jacques, Résidence du Parc Tête d'Or 4, Allée Marcel Achard, F-69100 Villeurbanne (FR)**

(74) Mandataire: **Seugnet, Jean Louis, RHONE- POULENC INTERSERVICES Service Brevets Chimie Centre de Recherches de Saint- Fons B.P. 62, F-69192 Saint- Fons Cédex (FR)**

EP 0 190 530 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention concerne des complexes de platineoléfine et plus particulièrement un complexe platine-alcénylcyclohexène utilisé comme catalyseur d'hydrosilylation, son procédé de préparation et les compositions organopolysiloxaniques contenant ce complexe.

On a déjà proposé de nombreux composés et complexes du platine pour promouvoir la réaction d'addition d'un organohydrogénopolysiloxane ayant des groupements = SiH sur un diorganopolysiloxane présentant des radicaux hydrocarbonés à insaturation alcénique en vue de former un produit d'addition présentant une nouvelle liaison silicium-carbone.

Cette réaction d'addition peut être schématisée de la façon suivante:

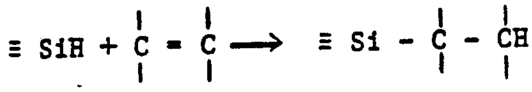

Un des premiers catalyseurs utiliseés est l'acide chloroplatinique comme décrit dans le brevet US-A-2 823 218 ou du platine métal disposé sur un support finement divisé comme décrit dans US-A-2 970 150.

Dans les brevets US-A-3 159 601 et US-A-1 159 602, on a proposé des complexes platine-oléfine en vue de diminuer les inconvénients inhérents à l'utilisation de platine finement divisé ou d'acide chloroplatinique et concernant l'empoisonnement du catalyseur et sa trop faible réactivité. Dans ce même but, dans le brevet US-A-3 220 372, on a proposé comme catalyseur les produits de réaction des dérivés du platine avec des alcools, des aldéhydes et des éthers.

On a proposé plus récemment dans les brevets US-A-3 715 334, 3 775 432 et 3 814 730 des complexes de platine et de vinylsiloxane, traités par une base et dans lesquels le rapport halogène sur platine est compris entre 0, ou un nombre décimal voisin de 0, et environ 1.

Dans le brevet européen EP-A-57 459, on décrit des complexes platine-styrène traités par une base et dans lesquels le rapport halogène sur platine (calculé en atome-gramme de platine et d'halogène) est supérieur à 1, mais inférieur à 4.

Les complexes du platine décrits ci-dessus ont certes permis de faire progresser l'état de la technique, mais ils présentent au moins un des inconvénients ci-dessous:

- ils sont instables et présentent une baisse d'activité catalytique au bout d'un temps de stockage relativement court, de l'ordre d'un mois ou moins,
- ils présentent une réactivité insuffisante à faible concentration,
- ils sont particulièrement difficiles à obtenir de façon simple et reproductible, en particulier pour ceux décrits par l'EP-A-57 459.

La présente invention a pour but de proposer un nouveau complexe du platine qui ne présente pas les inconvénients ci-dessus ou, du moins, que sous une forme très atténuée n'empêchant pas son utilisation commerciale.

Ce but et d'autres qui apparaitront à la lecture de la présente description est atteint par la présente invention qui concerne en effet un procédé de préparation d'un catalyseur d'hydrosilylation complexe platine-oléfine, caractérisé en ce qu'on fait réagir un halogénure de platine sur un composé basique, choisi parmi au moins un carbonate ou un bicarbonate de métal alcalin ou alcalino-terreux en présence d'un ligand oléfinique choisi parmi un alcényl-cyclohexène de formule:

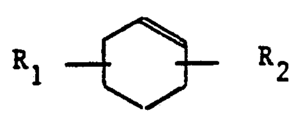 (I)

dans laquelle $R_1$ représente un radical alcényle ayant de 2 à 6 atomes de carbone, et $R_2$ représente l'atome d'hydrogène ou un radical organique n'ayant pas d'influence défavorable sur l'activité catalytique du platine, en particulier un radical alkyle ayant de 1 à 4 atomes de carbone pour obtenir un complexe platinealcénylcyclohexène présentant un rapport Cl/Pt d'atome-gramme d'halogène sur atome-gramme de platine compris entre pratiquement 0 et 4 inclus.

Comme radicaux alcényle $R_1$ on peut citer le radical vinyle, isopropen-1 yle, n propen-2 yle, n buten-3 yle, de préférence le radical $R_1$ est en position 4 sur le noyau cyclohexènyle.

Comme produit de formule I, on peut plus particulièrement utiliser: le vinyl-4 cyclohexène, le vinyl-1 cyclohexène, le vinyl-3 cyclohexène et le limonène méthyl-1 (méthyl-l'éthenyl)-4, cyclohexène, le vinyl-4 cyclohexène étant plus particulièrement préféré.

Le ligand de formule (I) est de préférence un liquide dans les conditions normales, mais on peut également utiliser des solides à bas point de fusion mis en solution dans un solvant organique compatible avec les silicones comme par exemple le toluène, l'hexane et le chlorobenzène.

Le simple cyclohexène non substitué par un radical alcényle n'est pas utilisable.

Comme radical organique n'ayant pas d'influence défavorable sur l'activité catalytique, on peut citer par

exemple les radicaux alkyle ayant de 1 à 4 atomes de carbone et les radicaux alcoxy ayant de 1 à 4 atomes de carbone.

Il est souhaitable pour la mise en oeuvre du procédé de l'invention d'utiliser un large excés molaire de ligand par rapport à l'halogénure de platine; de préférence, on utilise un rapport molaire ligand/halogénure de platine compris entre 10 et 30.

La quantité d'halogéne chimiquement combiné dans le complexe platine-alcénylcyclohexène de l'invention peut être évaluée par toute méthode convenable connue, en particulier par le procédé au disodium-biphényle décrit dans Analytical Chemistry, vol. 22, 311 (février 1950).

Il en est de même pour évaluer la teneur en platine des complexes selon l'invention. Une méthode convenable est celle par spectroscopie atomique telle que décrite par R. DOCKYER et G.E. HAIVES, The Analyst, 84, p. 385 (1959).

Pour la mise en oeuvre du procédé de l'invention, on peut utiliser l'acide chloroplatinique de formule:

$H_2 PtCl_6, nH_2O$

facilement disponible dans le commerce sous sa forme hexahydratée (n = 6).

On peut également utiliser les sels métalliques de l'acide chloroplatinique comme par exemple $NaHPtCl_6$, $_nH_2O$, $KHPtCl_6$, $nH_2O$, $Na_2PtCl_6$, $nH_2O$ et $K_2PtCl_6$, $nH_2O$.

On peut également utiliser $PtCl_4$, $nH_2O$ et les halogénures du type platineux tels que $PtCl_2$, $Na_2PtCl_4$, $_nH_2O$, $H_2PtCl_4$, $nH_2O$, $NaHPtCl_4$, $nH_2O$, $KHPtCl_4$, $nH_2O$ et $K_2PtBr$.

L'acide chloroplatinique constitue sous la forme hydratée ou anhydre le produit de départ préféré.

Le procédé de l'invention est par ailleurs mis en oeuvre de préférence au sein d'un solvant organique, en vue de solubiliser l'halogénure de platine et le complexe formé; ce solvant est de préférence choisi parmi un alcool aliphatique linéaire ou ramifié, ayant de 1 à 6 atomes de carbone, de préférence l'isopropanol et un solvant organique aromatique ou un hydrocarbure saturé tel que le benzène, le toluène, le xylène et l'hexane.

Comme composé basique, on utilise les carbonates et bicarbonates des métaux alcalins et alcalino-terreux tels que le carbonate de sodium, le bicarbonate de sodium, le carbonate de potassium et le bicarbonate de potassium, utilisés de préférence en excès de telle sorte que le rapport Cl/Pt tombe bien dans l'intervalle visé par la présente demande.

Les composés basiques préférés sont les bicarbonates alcalins qui permettent d'éviter à coup sûr la réduction chimique du catalyseur sous forme de métal.

La température de la réaction est généralement comprise entre 20 et 120° C, de préférence entre 60 et 100° C, pendant une durée comprise entre 5 min et 2 h.

Le rapport Cl/Pt final du complexe obtenu dépend du choix de l'halogénure de départ, de la quantité de composé basique ajoutée et de la température de réaction.

Le temps de réaction est essentiellement fonction de la température, il est d'autant plus court que la température est plus élevée.

Les complexes pour lesquels le rapport Cl/Pt est compris entre pratiquement 0 et 2 inclus sont préférés car ils sont plus solubles dans le solvant utilisé lors de leur préparation et ils présentent une meilleure réactivité dans les compositions organopolysiloxaniques.

Par un rapport Cl/Pt pratiquement égal à 0, on entend un rapport qui peut être égal à 0,1 ou moins sans être nul. On s'est en effet apercu qu'il est pratiquement impossible d'avoir un rapport égal à 0, car il subsiste toujours dans le milieu réactionnel des traces de chlore inorganique provenant des sous-produits de réaction et qu'il est extrémement difficile d'éliminer complétement.

Le complexe de platine selon l'invention peut être utilisé pour catalyser les compositions organopolysiloxaniques faisant intervenir lors de leur durcissement des réactions d'hydrosilylation.

Avant utilisation ce complexe est de préférence dilué dans un solvant organique compatible avec les silicones (toluène, hexane, chlorobenzène, isopropanol par exemple) ou dans une huile silicone vinylée.

De telles compositions peuvent être des compositions durcissant en élastomères à température ambiante du type de celles décrites dans les brevets US-A-3 220 372 et 3 814 730, utilisables entre autres pour l'imprégnation, le revêtement, l'encapsulation, le moulage et les empreintes dentaires.

Ces compositions peuvent être des compositions de revêtement avec ou sans solvant utilisables pour rendre un matériau non adhérent comme par exemple décrit dans les brevets britannique GB-A-1 374 732 et US-A-4 057 596, 4 071 644 et 4 162 356 pour les compositions sans solvant et dans les brevets US-A-3 527 659, 4 028 298 et GB-A-1 240 520 pour les compositions avec solvant.

Ces compositions sont généralement conservées avant emploi en 2 composantes ou 2 emballages, une des composantes contenant le catalyseur et en général au moins une partie de l'organopolysiloxane à radicaux organiques présentant une insaturation alcénique. L'autre composante contient notamment l'organohydrogénopolysiloxane et on effectue un mélange extemporané des 2 composantes juste avant leur emploi.

L'organopolysiloxane à insaturation alcénique et l'organohydrogénopolysiloxane peuvent être cycliques ou sensiblement linéaires; ce peut être avantageusement des polymères ou des copolymères.

La présente invention vise donc une composition organopolysiloxanique comportant:

(1) au moins un organopolysiloxane présentant par molécule au moins deux groupes à insaturation alcényle lié au silicium,

(2) au moins un organohydrogénopolvsiloxane présentant par molécule au moins trois groupes = SiH,

(3) une quantité catalytiquement efficace d'un complexe platine-alcénylcyclohexène obtenu par un procédé

conforme à la présente invention.

Le composé (1) peut être un organopolysiloxane présentant des motifs siloxanyles de formule:

$$Y_a Z_b SiO_{\frac{4-a-b}{2}} \qquad (I)$$

dans laquelle Y est un groupe hydrocarboné à insaturation alcényle ayant de 2 à 4 atomes de carbone inclusivement. Y peut être par exemple un groupe vinyle, propényle, allyle et butenyle, le groupe vinyle étant le groupe préféré.

Z est un groupe hydrocarboné monovalent n'ayant pas d'action défavorable sur l'activité du catalyseur. Z est généralement choisi parmi les groupes alkyle ayant de 1 à 8 atomes de carbone inclus tels que les groupes méthyle, éthyle, propyle et 3,3,3-trifluoropropyle et les groupes aryles tels que xylyle et tolyle et phényle, a est compris entre 1 et 3, b est compris entre 0 et 2 et a + b est compris entre 1 et 3, éventuellement tous les autres motifs étant des motifs de formule:

$$Z_c SiO_{\frac{4-c}{2}} \qquad (II)$$

dans laquelle Z a la même signification que ci-dessus et c a une valeur comprise entre 0 et 3.

Le composé (2) peut être un organohydrogénopolysiloxane comportant des motifs siloxanyles de formule:

$$H_d W_e SiO_{\frac{4-d-e}{2}} \qquad (III)$$

dans laquelle W est un groupe hydrocarboné monovalent n'ayant pas d'action défavorable sur l'activité du catalyseur et répondant à la même définition que Z; d a une valeur comprise entre 1 et 3, e a une valeur comprise entre 0 et 2. d + e a une valeur comprise entre 1 et 3, éventuellement tous les autres motifs étant des motifs de formule:

$$W_g SiO_{\frac{4-g}{2}} \qquad (IV)$$

dans laquelle W a la même signification que ci-dessus, g a une valeur comprise entre 0 et 3. Toutes les valeurs limites de a, b, c, d, e et g sont incluses.

Le composé (1) peut être uniquement formé de motifs de formule (1) ou peut contenir en outre des motifs de formule (2).

Le composé (1) peut présenter une structure linéaire ramifiée cyclique ou en réseau. Le degré de polymérisation est 2 ou plus et est généralement inférieur à 5000.

Y est généralement un radical vinyle et 2 est généralement choisi parmi les radicaux méthyle, éthyle et phényle.

Les composés (1) sont bien connus et sont par exemple décrits dans les brevets US-A-3 220 972, 3 344 111 et 3 434 366.

Dans les formules (1) et (2) ci-dessus a peut être un nombre entier compris entre 1 et 3, de préférence 1; b est un nombre entier compris entre 0 et 2 et la somme de a + b a une valeur comprise entre 1 et 3 et c est un nombre entier ayant une valeur comprise entre 0 et 3.

Des exemples de motifs siloxyles de formule (I) sont le motif vinyldiméthylsiloxanique, le motif vinylphénylméthylsiloxanique et le motif vinylsiloxanique.

Des exemples de motifs siloxyles de formule (II) sont les motifs $SiO_{4/2}$, diméthylsiloxane, méthylphénylsiloxane, diphénylsiloxane, méthylsiloxane et phénylsiloxane.

Des exemples de composés (1) sont les polydiméthylsiloxanes à extrémités diméthylvinylsiloxyle, les copolymères polyméthylvinylpolydiméthylsiloxaniques à extrémités triméthylsiloxyle, les copolymères polyméthylvinylpolydiméthylsiloxaniques à extrémités diméthylvinylsiloxyle, les polyméthylvinylsiloxanes cycliques.

Le composé (2) selon l'invention peut être uniquement formé de motifs de formule (III) ou comporte en plus des motifs de formule (IV).

Le composé (2) peut présenter une structure linéaire ramifiée cyclique ou en réseau. Le degré de polymérisation est 2 ou plus et est généralement inférieur à 5000.

Le groupe W a la même signification que le groupe Z ci-dessus.

Dans les formules (III) et (IV) ci-dessus, d est un nombre entier compris entre 1 et 3, de préférence 1; e est un nombre entier compris entre 0 et 2, la somme de d + e est comprise entre 1 et 3 et g est un nombre entier compris entre 0 et 3.

Des exemples de motifs de formule (III) sont:

$H(CH_3)_2SiO_{1/2}$, $HCH_3\ SiO_{2/2}$, $H(C_6H_5)SiO_{2/2}$.

Les exemples de motifs de formule (IV) sont les mêmes que ceux donnés plus haut pour les motifs de formule (II).

Des exemples de composé (2) sont:

- les polydiméthylsiloxanes à extrémité hydrogénodiméthylsiloxyle, les copolymères polydiméthylpolyhydrogénométhylsiloxaniques à extrémité triméthylsiloxyle, les copolymères polydiméthylpolyhydrogénométhylsiloxaniques à extrémité hydrogénodiméthylsiloxyle, les polyhydrogénométhylsiloxaniques à extrémités triméthylsiloxyle, les polyhydrogéno méthylsiloxanes cycliques.

Le rapport du nombre d'atomes d'hydrogéne liés au silicium dans le composé (2) sur le nombre de groupes à insaturation alcényle du composé (1) est compris entre 0,4 et 5, de préférence entre 0,6 et 2. Ce rapport peut être toutefois compris entre 2 et 5, si on souhaite faire des mousses d'élastomères.

Le composé (1) et/ou le composé (2) peut être dilué dans un solvant organique compatible avec les silicones.

Les compositions peuvent contenir en outre les additifs usuels suivant leurs domaines d'utilisation tels que des charges renforçantes et/ou non renforçantes pour les compositions élastomériques (silice de combustion, silice de précipitation, quartz broyé, carbonate de calcium, etc...) des inhibiteurs pour les compositions élastomériques et les compositions de revêtements en couche mince tels que les dérivés acétyléniques décrits dans les brevet US-A-8 445 120 et 4 347 346, des huiles polydiméthylsiloxanique bloquées à leurs extrémités par des groupements triméthylsiloxyle, etc...

Les compositions de l'invention peuvent être utilisées telles quelles ou diluées dans un solvant organique.

La réticulation de ces compositions s'effectue à une température comprise entre la température ambiante et 200° C suivant le type de composition et la quantité de catalyseur.

En général, la température est comprise entre 60 et 140° C. La quantité pondérale de catalyseur calculée en poids de platine-métal est généralement comprise entre 2 et 600 ppm, en général entre 5 et 200 ppm basés sur le poids total de la composition.

Les complexes selon l'invention sont des composés assez faciles à préparer et stables au stockage durant de très longues périodes à température ambiante et conservent leur réactivité très longtemps. Ils sont très réactifs à faible dose et sont particulièrement utiles dans les compositions d'élastomères vulcanisables à froid (RTV) et dans les compositions de revêtements avec ou sans solvant, pour rendre un matériau non adhérent.

Pour cette dernière application, les compositions de l'invention peuvent donc être utilisées telles quelles ou diluées dans un solvant. Quand elles sont dispersées ou diluées dans un solvant on utilise un solvant organique volatile compatible avec la composition, choisi par exemple parmi les alcanes, les coupes pétrolières renfermant des composés paraffiniques, le toluène, l'heptane, le xylène, l'isopropanol, la méthylisobutylcétone, le tétrahydrofuranne, le chlorobenzène, le chloroforme et le trichloro-1,1,1 éthane.

De préférence le solvant forme de 50 à 99 % en poids de la dispersion.

Par évaporation du solvant de la dispersion, la composition durcit et ces dispersions sont donc utiles comme compositions de revêtement pour des objets en métal, bois, verre et des feuilles souples en papier, matière plastique, etc...

Les compositions sans solvant sont également utilisables pour rendre un matériau non adhérent, tel que des feuilles métalliques, du verre, des matières plastiques ou du papier, à d'autres matériaux auxquels il adhérerait normalement. Dans le cas d'une composition sans solvant la composition présente avantageusement une viscosité ne dépassant pas 5000 mPa.s de préférence comprise entre 10 et 4000 mPas.s à 25° C et le rapport des atomes d'hydrogène liés au silicium dans (2) à la somme des radicaux alcényle liés au silicium dans (1) est d'au moins 0,5 : 1 et généralement inférieur à 2 : 1, ce rapport étant également applicable aux résines avec solvant. Par ailleurs, les composés (1) et (2) sont des polymères et/ou des copolymères à chaînes sensiblement linéaires.

Les compositions sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Hélio glissant" comportant en particulier 2 cylindres superposés: le rôle du cylindre placé le plus bas, plongeant dans le bac d'enduction où se trouvent les compositions, est d'imprégner en une couche très mince le cylindre placé le plus haut, le rôle de ce dernier est alors de déposer sur le papier les quantités désirées des compositions dont il est imprégné, un tel dosage est obtenu par réglage de la vitesse respective des deux cylindres qui tournent en sens inverse l'un de l'autre.

Les compositions diluées, c'est-à-dire avec solvant, peuvent être appliquées à l'aide des dispositifs utilisés sur les machines industrielles d'enduction du papier telles que le cylindre gravé "Mille points", le système nommé "Reverse Roll". Une fois déposées sur les supports les compositions sont durcies en quelques secondes par circulation dans des fours-tunnels chauffés vers 60 - 200° C, le temps de passage dans ces fours varie généralement de 2 à 30 secondes. Il est fonction, pour une longueur donnée des fours, de la vitesse à laquelle circulent les supports enduits (cette vitesse peut dépasser 200 mètres par minute); généralement un support constitué de matériaux cellulosiques circule plus rapidement (par exemple à la vitesse de 3 m/seconde

pour une température supérieure à 140° C) qu'un support à base de matière plastique. En effet ce dernier ne peut subir l'action de températures élevées, il sera donc soumis à une température plus basse, mais pendant une durée plus longue, par exemple il circulera à la vitesse de 0,75 m/seconde pour une température de l'ordre de 80° C.

Les quantités de compositions déposées sur les supports sont variables et s'échelonnent le plus souvent entre 0,1 et 5 g/m$^2$ de surface traitée. Ces quantités dépendent de la nature des supports et des propriétés antiadhérentes recherchées. Elles sont le plus souvant comprises entre 0,5 et 1,5 g/m$^2$ pour des supports non poreux.

D'autres avantages et caractéristiques de la présente invention apparaitront à la lecture des exemples suivants donnés à titre illustratif nullement limitatif. Sauf mention contraire, les pourcentages et parties indiqués sont en poids.

## EXEMPLE 1

Préparation d'un complexe platine-vinyl-4 cyclohexène.

On prépare un complexe platine-vinyl-4 cyclohexène en mélangeant:
- 1 partie d'$H_2PtCl_6$, 6 $H_2O$
- 5 parties d'isopropanol
- 2 parties de bicarbonate de sodium $NaHCO_3$
- 6 parties de vinyl-4 cyclohexène commercialisé par la société MERCK.

On dissout tout d'abord l'acide chloroplatinique dans l'isopropanol, puis on ajoute $NaHCO_3$ par petites fractions pour éviter la formation de mousse, car il se dégage du gaz carbonique, puis on ajoute le vinyl-4 cyclohexène.

Le mélange est traité sous reflux pendant 15 mn à environ 80° C tout en agitant.

On refroidit le mélange réactionnel à température ambiante et on élimine l'isopropanol à 20° C sous un vide de 15 mbar. On précipite les impuretés inorganiques dans l'hexane et après filtration, on concentre la solution à 40° C sous le vide de 1 à 10 mbar.

On obtient une huile de couleur orange vif très fluide avec un rendement pondéral de 85 % par rapport au poids total de platine et de réactifs initiaux. On obtient un rapport Cl/Pt = 1,8

La concentration en platine du complexe est ramenée à 3 % par dilution dans le toluène. C'est cette solution qui est utilisée par la suite.

## EXEMPLE 2

On répète le mode opératoire de l'exemple 1, sauf que le traitement sous reflux est de 40 mn. On obtient un rapport Cl/Pt de 1,3.

## EXEMPLE 3

On répète le mode opératoire de l'exemple 1, suf que l'on remplace le vinyl-4 cyclohexène par le limonène. On obtient une huile orangée dont le rapport Cl/Pt = 1,3.

## EXEMPLE COMPARATIF 4C

On répète le mode opératoire de l'exemple 1, sauf que l'on utilise les matières premières suivantes:
- 1 partie d'$H_2PtCl_6$, 6 $H_2O$
- 5 parties d'isopropanol
- 2 parties de bicarbonate de sodium
- 6 parties de cyclohexène.

On obtient au bout de 15 mn un précipité noir, indiquant que le platine a précipité.

**EXEMPLE COMPARATIF 5 C**

Synthèse d'un complexe platine-styrène. On répète exactement le mode opératoire de l'exemple (1) de la demande de brevet européen 57 459 sauf que la température et la durée de reflux sont respectivement de 75 - 77°C et de 30 mn. On obtient avec difficulté le complexe sous forme d'un goudron noir avec un rapport Cl/Pt de 2,5 utilisé par la suite en solution à 3 % dans le toluène.

**EXEMPLE 5**

Réactivité des complexes platine-alcénylcyclohexène dans les compositions sans solvant pour l'antiadhérence du papier.

Un bain de traitement est préparé selon le mode opératoire suivant:

A 100 parties d'une composition de silicone renfermant:

a) 90,5 % d'un copolymère de polydiméthylsiloxane ayant des motifs vinyle dans la chaîne et à terminaison diméthylvinylsiloxyle ayant environ 3 % en poids de groupements vinyle et présentant une viscosité d'environ 250 m.Pa.s à 25°C.

b) 2,5 % de tétraméthyl-1, 3, 5, 7 tétravinyl-,1, 3, 5, 7 cyclotétrasiloxane

c) 7 % d'un fluide polyméthylhydrosiloxanique à terminaison triméthylsiloxy utilisé comme agent de réticulation comprenant environ 1,5 % en poids d'atomes d'hydrogène liés au silicium, ayant une viscosité d'environ 20 mPa.s. à 25°C.

On ajoute à ce bain:

- 60 ppm de platine ($3.10^{-4}$ at.g. de Pt/kg de composition) sous la forme d'un complexe du platine préparé à l'exemple 1, 2 ou 3.

On agite vigoureusement, à température ambiante, le mélange pendant quelques minutes et on dépose ensuite ce mélange (environ l g/m$^2$) sans utiliser de solvant sur du papier, au moyen d'une barre d'enduction et on fait durcir la composition silicone dans un four à circulation d'air forcé réglé à une température variable.

On a ainsi étudié le temps de durcissement du revêtement de silicone en notant le temps de séjour minimum dans le four, nécessaire pour obtenir un revêtement bien durci. Les résultats obtenus sont rassemblés dans le tableaux I ci-après:

**TABLEAU I**

| Nature du catalyseur | Temps de réticulation (en secondes) | | Cl/Pt |
|---|---|---|---|
| | T° du four 110°C | T° du four 120°C | |
| Exemple 1 | 18 - 20 | 15 | 1,8 |
| Exemple 2 | 15 | 10 - 12 | 1,3 |
| Exemple 3 | 15 | 10 - 12 | 1,3 |
| * | 30 | 25 | 4,6 |
| $H_2PtCl_6, 6 H_2O$ | > 120 | 100 | 5,9 |
| Exemple 5C | > 60 | 50 | 2,5 |

Nota Bene: (*) Catalyseur qui est le produit de réaction de l'acide chloroplatinique sur l'octanol conformément à l'enseignement du brevet US-A-3 220 972.

**EXEMPLE 6**

A 100 g d'huile polydiméthylsiloxanique à terminaisons diméthylvinylsiloxyle (0,4 % en poids de groupements vinyle par rapport au poids du polymère) de viscosité 600 mPa.s à 25° C, on ajoute 45,0 g de silice de pyrogenation de surface specifique 300 m /g traitée par l'hexaméthyldisilazane. On ajoute à cet empâtage une composition organosilicique contenant:

(a) 1,7 g d'un copolymère polydiméthylsiloxanique ayant des motifs hydrogénométhylsiloxy dans la chaîne, présentant par rapport au poids du polymère 0,24 % d'atomes d'hydrogène liés au silicium et ayant environ 120 atomes de silicium par molécule et

(b) 8 g d'un polymère polydiméthylsiloxanique à terminaisons diméthylhydrogénosiloxyle de viscosité 30 mPa.s à 25°C

(c) 0,05 g de tétraméthyl-1, 3, 5, 7 tétravinyl 1, 3, 5, 7 cyclotétrasiloxane comme retardateur de prise

(d) 8 ppm de platine-métal sous la forme du complexe platine-vinyl-4 cyclohexène préparé à l'exemple 2 en solution à 3 %.

Après mélange, la composition réticule à température ambiante et on mesure l'augmentation de la viscosité de la composition en fonction du temps et la dureté Shore A dessus/dessous des éprouvettes formées au bout de 24 h de réticulation.

Les résultats sont rassemblés dans le tableau II ci-après.

**TABLEAU II**

| Nature du catalyseur | Stabilité du bain | Dureté shore A (Dessus/Dessous)(**) |
|---|---|---|
| (*) | 4 h | 22/27 |
| Exemple 2 | 4 h 30 mn | 21/26 |

Nota Bene:

(*) Catalyseur qui est le produit de réaction de l'acide chloroplatinique sur l'octanol conformément à l'enseignement du brevet US-A-3 220 972.

(**) Dessus = dureté mesurée sur la face de l'éprouvette exposée à l'air

Dessous = dureté mesurée sur la face de l'éprouvette en contact avec la base du moule

**Revendications**

1. Procédé de préparation d'un catalyseur d'hydrosilylation complexe platine-oléfine, caractérisé en ce qu'on fait réagir un halogénure de platine sur un composé basique choisi parmi au moins un carbonate ou un bicarbonate de métal alcalin ou alcalinoterreux, en présence d'un ligand oléfinique choisi parmi un alcényl-cyclohexène de formule

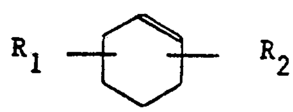

(I)

dans laquelle $R_1$ représente un radical alcényle ayant de 2 à 6 atomes de carbone, et $R_2$ représente l'atome d'hydrogène ou un radical organique n'ayant pas d'influence défavorable sur l'activité catalytique du platine en particulier un radical alkyle ayant de 1 à 4 atomes de carbone pour obtenir un complexe platine-vinylcyclohexène présentant un rapport Cl/Pt d'atome-gramme d'halogène sur atome-gramme de platine, compris pratiquement entre 0 et 4 inclus.

2. Procédé selon la revendication 1, caractérisé en ce que le composé basique est un bicarbonate de métal alcalin.

3. Procédé selon l'une des revendications 1 ou 2, caractérisé en ce que le rapport Cl/Pt est compris entre pratiquement 0 et 2 inclus.

4. Procédé selon une quelconque des revendications précédentes, caractérisé en ce que la réaction est mise en oeuvre au sein d'un solvant organique choisi parmi un alcool aliphatique ayant de 1 à 6 atomes de carbone, un solvant organique aromatique et un hydrocarbure saturé.

5. Procédé selon une quelconque des revendications précédentes, caractérisé en ce que l'halogénure de platine est l'acide chloroplatinique.

6. Procédé selon l'une quelconque des revendications précédentes, caractérisé en ce que la réaction est mise en oeuvre à une temperature comprise entre 20 et 120° C durant une durée comprise entre 5 mn et 2 h.

7. Complexe platine-alcénylcyclohexène obtenu par la mise en oeuvre d'un procédé tel que défini à l'une quelconque des revendications 1 à 6.

8. Composition organopolysiloxanique caractérisée en ce qu'elle comporte:

(1) au moins un organopolysiloxane présentant par molécule, au moins deux groupes à insaturation alcényle liés au silicium,

(2) au moins un organohydrogénopolysiloxane présentant par molécule au moins trois groupes SiH,

(3) une quantité catalytiquement efficace d'un complexe platine-alcénylcyclohexène tel que défini à la

revendication 7.

9. Composition organopolysiloxanique selon la revendication 8, caractérisée en ce qu'elle comporte:

(1) au moins un organopolysiloxane présentant des motifs siloxyles de formule:

$$Y_a Z_b SiO_{\frac{4-a-b}{2}}$$

dans laquelle:

Y est un groupe hydrocarboné à insaturation alcényle ayant de 2 à 4 atomes de carbone inclusivement

Z est un groupe hydrocarboné monovalent n'ayant pas d'action défavorable sur l'activité du catalyseur

a est compris entre 1 et 3; b est compris entre 0 et 2 et a + b est compris entre 1 et 3.

Eventuellement, tous les autres motifs sont des motifs de formule:

$$Z_c SiO_{\frac{4-c}{2}} \quad (2)$$

dans laquelle Z a la même signification que ci-dessus et c a une valeur comprise entre 0 et 3,

(2) au moins un organohydrogénopolysiloxane comportant des motifs siloxyles de formule:

$$H_d W_e Si\ O_{\frac{4-d-e}{2}} \quad (3)$$

dans laquelle W répond à la même définition ci-dessus pour Z, d a une valeur comprise entre 1 et 3, c a une valeur comprise entre 0 et 2, d + e a une valeur comprise entre 1 et 3, éventuellement tous les autres motifs étant les motifs de formule:

$$W_g\ SiO_{\frac{4-g}{2}}$$

dans laquelle W a la même signification que ci-dessus et g a une valeur comprise entre 0 et 3.

10. Composition organopolysiloxanique durcissant en élastomère, caractérisée en ce qu'elle comporte une composition telle que définie à la revendication 8 ou 9.

11. Composition organopolysiloxanique selon la revendication 10, caractérisée en ce qu'elle comporte en outre au moins une charge renforçante etjou non renforçante.

12. Composition organopolysiloxanique diluée dans un solvant organique utilisable pour rendre un matériau non adhérent, caractérisée en ce qu'elle comporte une composition telle que définie à la revendication 8 ou 9 et en ce que les composés (1) et (2) sont des polymères et/ou des copolymères à chaînes sensiblement linéaires et en ce que le rapport des atomes d'hydrogène liés au silicium dans (2) aux radicaux alcényle liés au silicium dans (1) est compris entre 0,5 : 1 et 2 : 1.

13. Composition selon la revendication 12, caractérisée en ce qu'elle est sans solvant et en ce que sa viscosité ne dépasse 5000 mPa.s à 25° C.

**Patentansprüche**

1. Verfahren zur Herstellung eines Platin-olefinkomplex-Hydrosilylierungskatalysators, dadurch gekennzeichnet, daß man ein Platinhalogenid auf eine basische Verbindung, ausgewählt unter mindestens einem Alkalimetall- oder Erdalkalimetallcarbonat oder -bicarbonat, einwirken läßt, in Gegenwart eines olefinischen Liganden, ausgewählt unter Alkenylcyclohexenen der Formel

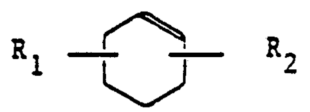 (I)

worin $R_1$ einen Alkenylrest mit 2 bis 6 Kohlenstoffatomen bedeutet und $R_2$ das Wasserstoffatom oder einen organischen Rest, der keinen ungünstigen Einfluß auf die katalytische Aktivität des Platins hat, insbesondere einen Alkylrest mit 1 bis 4 Kohlenstoffatomen bedeutet, um einen Platin-vinylcyclohexenkomplex zu erhalten, der ein Verhältnis Cl/Pt, Halogengrammatom zu Platingrammatom praktisch zwischen 0 und 4 einschließlich aufweist.

2. Verfahren gemäß Anspruch 1, dadurch gekennzeichnet, daß die basische Verbindung ein Alkalimetallbicarbonat ist.

3. Verfahren gemäß einem der Ansprüche 1 oder 2, dadurch gekennzeichnet, daß das Verhältnis Cl/Pt praktisch zwischen 0 und 2 einschließlich liegt.

4. Verfahren gemäß einem der vorhergehenden Ansprüche, dadurch gekennzeichnet, daß die Reaktion in einem organischen Lösungsmittel, ausgewählt unter einem aliphatischen Alkohol mit 1 bis 6 Kohlenstoffatomen, einem organischen aromatischen Lösungsmittel und einem gesättigten Kohlenwasserstoff durchgeführt wird.

5. Verfahren gemäß einem der vorhergehenden Ansprüche, dadurch gekennzeichnet, daß das Platinhalogenid Chlorplatinsäure ist.

6. Verfahren gemäß einem der vorhergehenden Ansprüche, dadurch gekennzeichnet, daß die Reaktion bei einer Temperatur zwischen 20 und 120°C während einer Dauer zwischen 5 Minuten und 2 Stunden durchgeführt wird.

7. Platin-alkenylcyclohexenkomplex, erhalten durch Durchführung eines Verfahrens, wie es in einem der Ansprüche 1 bis 6 definiert ist.

8. Organopolysiloxanzusammensetzung, dadurch gekennzeichnet, daß sie enthält:

(1) Mindestens ein Organopolysiloxan, das pro Molekül mindestens 2 Gruppen mit Alkenylunsättigung, gebunden an Silicium, aufweist,

(2) mindestens ein Organohydrogenpolysiloxan, das pro Molekül mindestens drei Gruppen SiH aufweist,

(3) eine katalytisch wirksame Menge eines Platin-alkenylcyclohexenkomplexes, der in Anspruch 7 definiert ist.

9. Organopolysiloxanzusammensetzung gemäß Anspruch 8, dadurch gekennzeichnet, daß sie enthält:

(1) mindestens ein Organopolysiloxan, das Siloxylgruppierungen der Formel:

$$Y_a Z_b SiO_{\frac{4-a-b}{2}} \quad (1)$$

aufweist, worin:

Y eine Kohlenwasserstoffgruppe mit Alkenylunsättigung mit 2 bis 4 Kohlenstoffatomen einschließlich ist,

Z eine einwertige Kohlenwasserstoffgruppe ist, die keine ungünstige Wirkung auf die Aktivität des Katalysators hat,

a zwischen 1 und 3 liegt; b zwischen 0 und 2 ist und a + b zwischen 1 und 3 ist,

wobei gegebenenfalls alle anderen Gruppierungen Gruppierungen der Formel:

$$Z_c SiO_{\frac{4-c}{2}} \quad (2)$$

sind, worin Z dieselbe Bedeutung wie oben hat und c einen Wert zwischen 0 und 3 hat,

2) mindestens ein Organohydrogenpolysiloxan mit Siloxylgruppierungen der Formel:

$$H_d W_e Si\, O_{\frac{4-d-e}{2}} \quad (3)$$

worin W derselben Definition wie oben für Z entspricht, d einen Wert zwischen 1 und 3 hat, c einen Wert zwischen 0 und 2 hat, d + e einen Wert zwischen 1 und 3 hat, wobei gegebenenfalls alle anderen Gruppierungen Gruppen der Formel:

$$W_g\,SiO_{\frac{4-g}{2}} \qquad (4)$$

sind, worin W dieselbe Bedeutung wie oben hat und g einen Wert zwischen 0 und 3 hat.

10. Organopolysiloxanzusammensetzung, die zu einem Elastomeren härtet, dadurch gekennzeichnet, daß sie eine Zusammensetzung, wie oben in Anspruch 8 oder 9 definiert, enthält.

11. Organopolysiloxanzusammensetzung gemäß Anspruch 10, dadurch gekennzeichnet, daß sie außerdem mindestens einen verstärkenden und/oder nicht-verstärkenden Füllstoff enthält.

12. Organopolysiloxanzusammensetzung, verdünnt in einem organischen Lösungsmittel, verwendbar, um ein Material nichthaftend zu machen, dadurch gekennzeichnet, daß sie eine Zusammensetzung enthält, wie in Anspruch 8 oder 9 definiert, und daß die Verbindungen (1) und (2) Polymere und/oder Copolymere mit im wesentlichen linearen Ketten sind und daß das Verhältnis der an das Silicium gebundenen Wasserstoffatome in (2) zu den an das Silicium gebundenen Alkenylresten in (1) zwischen 0,5 : 1 und 2 : 1 liegt.

13. Zusammensetzung gemäß Anspruch 12, dadurch gekennzeichnet, daß sie ohne Lösungsmittel ist und daß ihre Viskosität 5000 mPa.s bei 25° C nicht überschreitet.

**Claims**

1. Process for the preparation of a platinum-olefin complex hydrosilylation catalyst, characterized in that a platinum halide is reacted with a basic compound, chosen from at least one alkali metal or alkaline-earth metal carbonate or bicarbonate, in the presence of an olefinic ligand chosen from alkenylcyclohexenes of formula

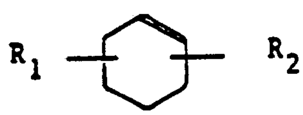

(I)

in which $R_1$ denotes an alkenyl radical containing from 2 to 6 carbon atoms and $R_2$ denotes the hydrogen atom or an organic radical which does not have an adverse effect on the catalytic activity of platinum, in particular an alkyl radical containing from 1 to 4 carbon atoms, to give a platinum-vinylcyclohexene complex with a Cl/Pt ratio, in gram-atoms of halogen to gram-atoms of platinum, of between practically 0 and 4 inclusive.

2. Process according to Claim 1, characterized in that the basic compound is an alkali metal bicarbonate.

3. Process according to one of Claims 1 or 2, characterized in that the Cl/Pt ratio is between practically 0 and 2 inclusive.

4. Process according to any one of the preceding claims, characterized in that the reaction is carried out in an organic solvent chosen from an aliphatic alcohol containing from 1 to 6 carbon atoms, an aromatic organic solvent and a saturated hydrocarbon.

5. Process according to any one of the preceding claims, characterized in that the platinum halide is chloroplatinic acid.

6. Process according to any one of the preceding claims, characterized in that the reaction is carried out at a temperature of between 20 and 120° C for a period of between 5 min and 2 h.

7. Platinum-alkenylcyclohexene complex obtained by the use of a process as defined in any one of Claims 1 to 6.

8. Organopolysiloxane composition characterized in that it comprises:

(1) at least one organopolysiloxane containing per molecule, at least two groups with alkenyl unsaturation which are bonded to silicon,

(2) at least one organohydropolysiloxane containing at least three SiH groups per molekule and

(3) a catalytically effective quantity of a platinum-alkenylcyclohexene complex as defined in Claim 7.

9. Organopolysiloxane composition according to Claim 8, characterized in that it comprises:

(1) at least one organopolysiloxane containing siloxyl units of formula:

$$Y_a\,Z_b\,SiO_{\frac{4-a-b}{2}} \qquad (1)$$

in which:

Y is a hydrocarbon group with alkenyl unsaturation, containing from 2 to 4 carbon atoms inclusive,

Z is a monovalent hydrocarbon group which does not have an adverse effect on the activity of the catalyst,

a is from 1 to 3, b is from 0 to 2 and a + b is from 1 to 3.

All the other units, if any, are units of formula:

$$Z_cSiO_{\frac{4-c}{2}} \quad (2)$$

in which Z has the same meaning as above and c has a value from 0 to 3,

(2) at least one organohydropolysiloxane containing siloxyl units of formula:

$$H_dW_eSi\,O_{\frac{4-d-e}{2}} \quad (3)$$

in which W corresponds to the same definition as that given above for Z, d has a value from 1 to 3, c has a value from 0 to 2, d + e has a value from 1 to 3, and all the other units, if any, are units of formula:

$$W_g\,SiO_{\frac{4-g}{2}}$$

in which W has the same meaning as above and g has a value from 0 to 3.

10. Organopolysiloxane composition which cures to give an elastomer, characterized in that it contains a composition as defined in Claim 8 or 9.

11. Organopolysiloxane composition according to Claim 10, characterized in that it additionally contains at least one reinforcing and/or non-reinforcing filler.

12. Organopolysiloxane composition diluted in an organic solvent which can be employed to impart non-stick properties to a material, characterized in that it contains a composition as defined in Claim 8 or 9 and in that the compounds (1) and (2) are polymers and/or copolymers containing substantially linear chains and in that the ratio of hydrogen atoms bonded to silicon in (2) to the alkenyl radicals bonded to silicon in (1) is from 0.5 : 1 to 2 : 1.

13. Composition according to Claim 12, characterized in that it is solvent-free and in that its viscosity does not exceed 5000 mPa.s at 25°C.